(19) Europäisches Patentamt
European Patent Office
Office européen des brevets

(11) **EP 3 918 275 B1**

(12) **EUROPEAN PATENT SPECIFICATION**

(45) Date of publication and mention of the grant of the patent:
**03.05.2023 Bulletin 2023/18**

(21) Application number: **20709768.4**

(22) Date of filing: **29.01.2020**

(51) International Patent Classification (IPC):
**G01B 11/06** *(2006.01)* **G01B 11/16** *(2006.01)*
**G01N 21/89** *(2006.01)* **G01N 21/84** *(2006.01)*

(52) Cooperative Patent Classification (CPC):
**G01N 21/8422; G01B 11/161; G01B 11/165;**
G01N 2021/8427; G01N 2021/8918

(86) International application number:
**PCT/PL2020/050010**

(87) International publication number:
**WO 2020/159390 (06.08.2020 Gazette 2020/32)**

(54) **METHOD OF DETERMINING THE STRENGTH LIMIT AND THE DEGREE OF CRACKING OF A MATERIAL USING AN OPTICAL INTERFEROMETRY METHOD**

VERFAHREN ZUR BESTIMMUNG DER FESTIGKEITSGRENZE UND DES CRACKGRADS EINES MATERIALS UNTER VERWENDUNG EINER OPTISCHEN INTERFEROMETRIE-METHODE

PROCÉDÉ POUR DETERMINER LA LIMIT DE FORCE ET LE DEGRÉ DE CRAQUAGE D'UN MATERIAL UTILISANT UNE METHODE D' INTERFEROMETRIE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2019 PL 42873219**

(43) Date of publication of application:
**08.12.2021 Bulletin 2021/49**

(73) Proprietor: **Instytut Fizyki Jadrowej Im. Henryka Niewodniczanskiego PAN**
**31-342 Kraków (PL)**

(72) Inventors:
• **ZABILA, Yevhen**
**31-358 Krakow (PL)**
• **KRUPINSKI, Michal**
**41-219 Sosnowiec (PL)**
• **ZARZYCKI, Arkadiusz**
**30-011 Krakow (PL)**
• **PERZANOWSKI, Marcin**
**97-200 Tomaszow Mazowiecki (PL)**
• **MAXIMENKO, Alexey**
**31-342 Krakow (PL)**
• **HOREGLAD, Piotr**
**37-700 Przemysl (PL)**
• **STRACZEK, Piotr**
**32-031 Mogilany (PL)**
• **MARSZALEK, Marta**
**31-358 Krakow (PL)**

(74) Representative: **Kacperski, Andrzej**
**Kancelaria Prawno-Patentowa**
**ul. Kupa 3/9**
**31-057 Krakow (PL)**

(56) References cited:
**US-A- 4 781 455    US-A- 4 939 368**

• **Y. ZABILA ET AL: "Optical Diffraction Strain Sensor Prepared by Interference Lithography",** ACTA PHYSICA POLONICA: SERIES A, vol. 133, no. 2, February 2018 (2018-02), pages 309-312, XP55696108, PL ISSN: 0587-4246, DOI: 10.12693/APhysPolA.133.309

**Description**

The subject of the invention is a method of determining the limit of strength and the degree of deformation of a material using an optical interferometry method, intended for non-contact determination of the yield point of thin-film materials used in particular in flexible electronic systems.

A non-contact method that uses wave reflection on a surface is widely known and used in industrial practice.

According to a description US 4 939 368 a method and apparatus for measuring strain of an object is provided. The object to be measured is provided with a diffraction grating which is illuminated with radiation including at least two frequencies to produce an interference pattern. At least a portion of the interference pattern corresponding to at least one of the frequencies is detected and analyzed to determine strain. In some embodiments, the frequency of a portion of the diffraction pattern is detected, for example, by a human eye and the detected frequency compared with known frequencies to determine strain. In other embodiments, the relative angular position of portions of the pattern corresponding to different frequencies is detected. Since the relative angular position and intensity is affected by strain but not by certain rigid body rotations, strain measurement free of body rotation error may be made.

According to a description US 4 781 455 a method and an apparatus for optical strain measurement are disclosed. Prior to the deformation or loading of the object to be tested, the latter is provided with a thin transparent film which adheres well to the object and has a thickness between 3 and 20 $\mu$m. After the deformation or during loading, the wavelength-dependent intensity course developed because of the interference of the portion of the beam of light reflected and superimposed at the boundary surfaces of the transparent film is measured and evaluated by a computer.

Non-contact measuring techniques are used to measure the deformation of thin-film materials.

US 6 795 198 describes a method and apparatus for measuring a thin film of semiconductor devices for electronic products. This device contains a laser that produces an optical pulse and a diffraction mask that receives the optical pulse and splits it generating at least two excitatory pulses. The optical system receives optical pulses spatially and temporally and situates them on the object or in its structure, creating an excitation pattern that triggers the acoustic wave. The acoustic wave modulates a structure property, e.g., generates a time-dependent "surface pulsation" or modulates an optical property, such as a refractive index of a sample or an absorption coefficient. The surface pulsation is defined as a time-dependent change in surface morphology; its peak to zero amplitude usually does not exceed one nanometer. The device also includes a light source that produces a probe beam that reflects a modulated property to produce a signal beam. The optical detection system receives the reflected signal beam, and in response generates a light-induced electric signal. The analyzer analyzes the signal in order to measure the properties of the tested structure.

Another method is the optical interferometry method, which uses the phenomenon of light wave interference. A known measuring system used in this method includes an optical sensor with a diffraction grating applied to a sample of the material being tested.

Such a system is presented in the publication of Y. Zabila, P. Horeglad, M. Krupiński, A. Zarzycki, M. Perzanowski, A. Maximenko, M. Marszatek "Optical Diffraction Strain Sensor Prepared by Interference Lithography", Acta Physica Polonica series A, no 133 (4), 1 February 2018, pages 309-312, XP 55696108.

In the described system, the diffraction grating can be used in as a sensor operating in transmission or reflection mode. The general scheme of the measuring system operating in transmission mode includes a low-power laser, sensor (diffraction grating) placed on the surface of the tested sample, and a CCD, CMOS or other photosensitive matrix that records in real time the interference image created after the light passes through the grating. Transmission, reflection image or both can be used for the measurement. It can be seen that although the edges of the structures forming the diffraction grating are defective, the interference image is very clear. This is due to the good repeatability of the solid grating over a large area. Therefore, the defects arising during the production of the gratings do not affect the position of the fringes and can only lead to a slight scattering of light, changing the value of the background signal intensity, which does not affect the measurement.

Based on the distance between interference fringes recorded before and after sensor deformation, the components of relative deformation ($\varepsilon_x = \Delta x/x_0$ , $\varepsilon_y = \Delta y/y_0$) of the tested material in two perpendicular directions: $x$ (horizontally) and $y$ (vertically) can be determined. Based on such a measurement, the Poisson's ratio can then be determined

$$\mu_s = -\varepsilon_x/\varepsilon_y$$

If the values of the Young's modulus of the measured material are known, the sensor also enables the measurement of mechanical stress in the elastic deformations range.

The aim of the solution according to the invention is to introduce for the above-described known method of deformation measurement - an additional possibility of determining the strength limit and the degree of material cracking.

According to the invention, the method thus first includes determining the degree of deformation of the substrate material by optical interferometry, in which a beam of light from the laser is directed to a sample of the material being tested, on the surface of which a diffraction grating is placed which is a sensor. The beam of this light also passes through a thin film of the tested material, placed on the surface of the flexible substrate opposite to the grating. The light passing through the sample is directed to the photosensitive matrix recording the interference image, on the basis of which the relative deformation ($\varepsilon_x$, $\varepsilon_y$) components of the tested material are determined, whereby the beam intensity, corresponding to the zero-order interference fringe passing through the tested material before and after deformation is measured.

The solution according to the invention is characterized by introducing modulation of the primary laser beam with a periodic function of a given frequency that allows to obtain in the detection path a signal independent of external interference factors, then the AC signal from the detector is amplified and filtered using a Fourier filter or phase-sensitive amplifier, and then the signal is transmitted to the data logger, while during the measurement the intensity of the central interference fringe falling on the photosensitive matrix decreases by directing the central fringe directly to the photo recorder using a semi-transparent mirror, as a result of which data on changes in the intensity of light passing through the sample is obtained. As a result of applying the above measurement steps, identification of the strength limit of the tested material is obtained.

Then, for the remaining film of the tested material with microcracks, the total cross-sectional area of cracks is determined in relation to the surface determined by the cross-section of the laser beam, resulting in the parameter of the degree of cracking of the tested material.

In each of the measurement stages, a diffraction grating is used as a sensor, which is a deformable element.

The solution according to the invention, is presented below, with reference to the drawings in which the individual figures show:

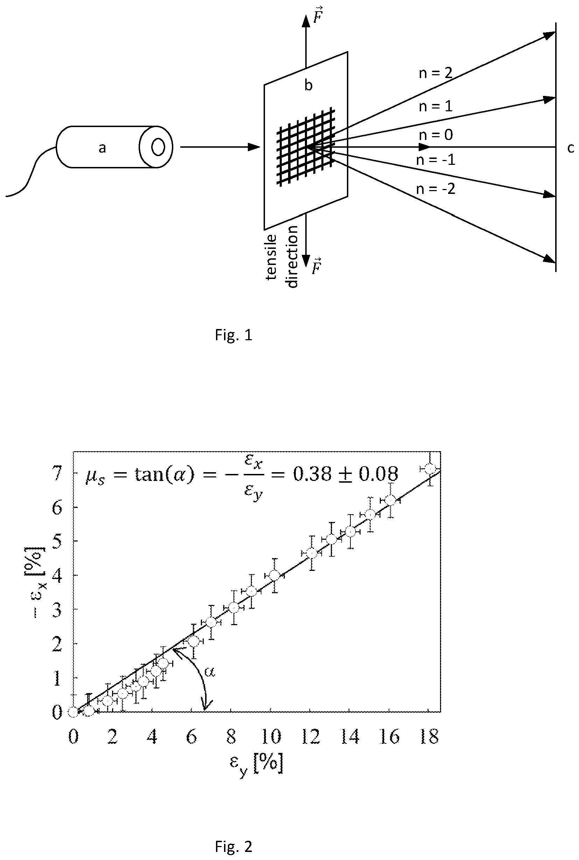

FIG. 1 - diagram of a known measuring system using an optical deformations sensor,
FIG. 2 - exemplary results of a method known in the art for measuring deformation components $\varepsilon_x$, $\varepsilon_y$ and a coefficient $v$ using an optical sensor; the measurement was made for polyimide film and the value of Poisson's ratio obtained was $\mu_s = 0.38 \pm 0.08$,
FIG. 3 - diagram of the system for measuring according to the invention,
FIG. 4 - diagram of a sample integrated with an optical deformations sensor for determining the strength limit in tensile tests according to the invention,
FIG. 5 - exemplary measurement results according to the invention.

The method according to the invention allows determining the material strength limit, i.e. deformation, at which microcracks appear in the tested material. The polymeric substrate is more flexible than the film of the material being tested, such as, for example, a thin metallic film. Therefore, cracks during stretching will appear only in the film of the material being tested.

To determine the strength limit of the material, in addition to the data obtained from the interference image ($\varepsilon_x$, $\varepsilon_y$, $\mu_s$), it is necessary to measure the intensity of the beam(I) passing through the measured material before and after the deformation. For this purpose, laser beam modulation has been introduced. This allows the detection path to obtain a signal independent of external interference factors (for example, changes in lighting conditions in the room or changes in sunlight outside the window).

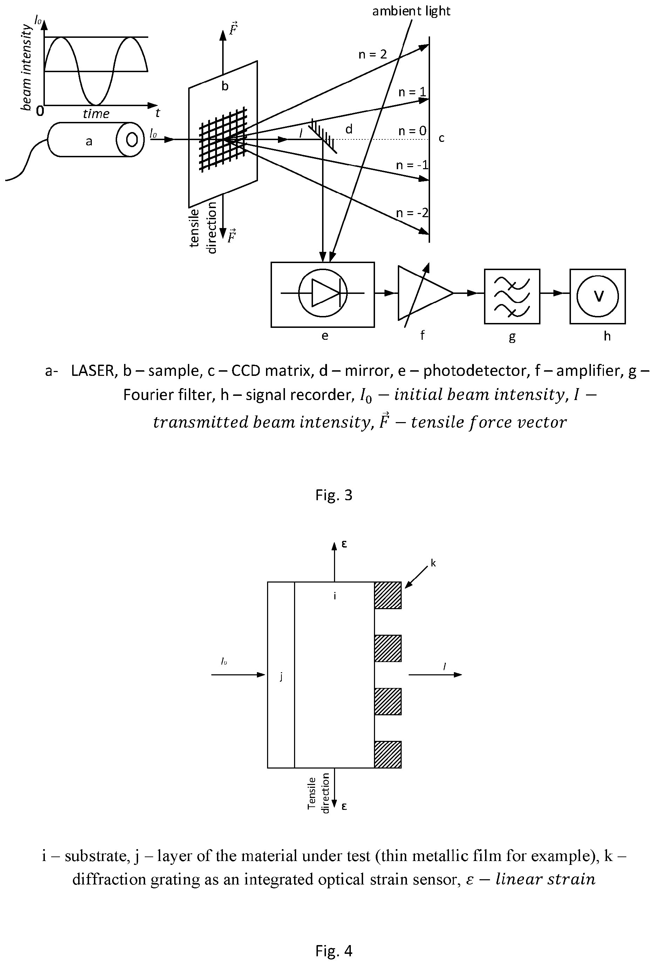

The measuring system is equipped with a semi-transparent mirror shown in FIG. 3. The position of the mirror is chosen so that it reflects the central interference fringe ($n = 0$) towards the photodetector. The intensity of the central fringe is much higher than the intensity of the higher order ($n = 1, 2, 3, ...$) interference maxima, and may locally damage the photosensitive matrix. Therefore, one of the mirror's functions is to reduce the brightness of the central interference fringe falling on the matrix. Additionally, lowering the intensity of the zero order fringe in relation to the maxima bent at higher angles allows narrowing the range of intensities registered by the matrix, which improves the recording of interference image.

The second function of the mirror is to direct part or all of the beam passing through the mesh without deflection on the photodetector, used to read the intensity of the beam passing through the sensor. This intensity is recorded in the measuring track schematically shown in FIG. 3. High accuracy of the beam intensity measurement is ensured by modulation of the primary laser beam with a periodic function of a given frequency $f_0$, which allows the detection path to obtain a signal independent of external interference factors. It can eliminate interference from external light sources, such as lighting in the room or diffused light from other devices.

The AC signal from the detector is amplified and filtered using a Fourier filter or phase-sensitive amplifier (Lock-In), and then transmitted to a data recorder. It is worth noting that during the deformation of the grating the position of the central fringe does not change, which allows continuous monitoring of the intensity of the central fringe without the need to move the mirror during measurement.

To determine the strength limit of the material, the diffraction grating of the optical deformation sensor is applied to one side of the polymer substrate, and a thin film of the tested material is applied to the opposite side. A cross-section of such a system is schematically shown in FIG. 4. The intensity of the light beam passing through such a system can be described by the formula:

$$\frac{I_\varepsilon}{I_{\varepsilon=0}} = \frac{S_s + S_f \, e^{-\chi_f \, d_f \, (1+\mu_f \, \varepsilon)}}{S_s + S_f \, e^{-\chi_f \, d_f}} \, e^{-\chi_s \, d_s \, \mu_s \, \varepsilon}$$

(1)

where: $\varepsilon$ - relative deformation in the direction of stretching the sample; $I_\varepsilon$ - intensity of the beam passing through the tested sample, measured for a given value $\varepsilon$; $I_{\varepsilon=0}$ - initial intensity value $I_\varepsilon$ determined for the undeformed sample ($\varepsilon$ = 0); $S_f$ - surface area of the sample covered with a film of tested material; $S_s$ - total surface of cracks in the film of the tested material; $d_f$ and $d_s$ - initial thicknesses of the tested film (index $f$) and a polymeric substrate (index s) determined for the undeformed sample; $\mu_f$ and $\mu_s$ - Poisson's ratio of film and substrate, respectively; $\chi_f$ and $\chi_s$ -film and substrate absorption coefficients.

In the case of small deformations, below the material strength limit, the film of tested material has no cracks ($S_s$ = 0), and formula (1) is simplified to

$$\frac{I_\varepsilon}{I_{\varepsilon=0}} = e^{-(\chi_s \, d_s \, \mu_s + \chi_f \, d_f \, \mu_f) \, \varepsilon}$$

(2)

It can also be linearized to:

$$\ln\left(\frac{I_\varepsilon}{I_{\varepsilon=0}}\right) = -(\chi_s \, d_s \, \mu_s + \chi_f \, d_f \, \mu_f) \, \varepsilon$$

(3)

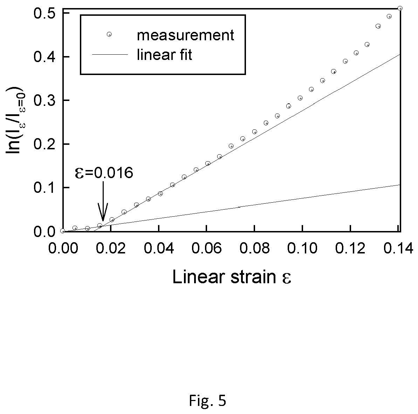

The exemplary results of measuring the above quantity for a bismuth film with a thickness of 50 nm are shown in FIG. 5 - results of light beam intensity measurement ($\lambda$ = 650 nm, power of the laser diode used P = 1 mW) passed through the film-substrate system shown in the form of $\ln(I_\varepsilon/I_{\varepsilon=0}) = f(\varepsilon)$. The measurement was made for a 50 nm bismuth film deposited on a polyimide substrate 12.7 $\mu$m thick. The measurement data is marked with points and fitting is marked with lines.

For the data presented in the chart, two areas can be distinguished: initial one, where due to the lack of cracks a linear relationship consistent with equation (3) and a non-linear range described by equation (1) can be observed. The clear bend of the waveform visible on the graph for $\varepsilon$ = 1,6% defines the material strength limit and determines the deformation at which cracks are formed in the film. This value was verified using scanning electron microscopy, where for bismuth 50 nm thick films, the formation of clear microcracks was observed after exceeding the deformation ($\varepsilon$= 1,6%).

The present invention allows measurements of deformations exceeding the strength limit. Such measurements allow quantifying the degree of material damage. To this end, the ratio of the parameter $S_s$ determining the total cross-sectional area of cracks to the surface area $S$ defined by the cross-section of the laser beam should be determined for the film with microcracks. This ratio can be taken as a measure of the degree of material damage and can be used for quantitative analysis of microcracks. The optical model shows that its value can be determined as:

$$\frac{S_s}{S} = \left( 1 + e^{\chi_f \, d_f} \left( \frac{e^{\chi_f \, d_f \, \mu_f \, \varepsilon} - 1}{\frac{I_\varepsilon}{I_{\varepsilon=0}} e^{(\chi_f \, d_f \, \mu_f + \chi_s \, d_s \, \mu_s)\varepsilon} - 1} - 1 \right) \right)^{-1}$$

(4)

For a homogeneous diameter of laser beam $D$ value $S$ is determined as the cross-section $S = \pi D^2/4$.

Exemplary application of the described method includes testing of thin-film materials intended for use in flexible electronic systems. Each material of this type before use in electronics must be checked for resistance to cracks that may occur during deformation of the systems. The strength limit determines the maximum deformation to which the system can be subjected during operation and is one of the most important parameters of any flexible electronic system.

The presented method ensures fast, non-invasive measurement of this parameter, in working conditions and with high accuracy.

**Claims**

1. A method of determining the strength limit of a material using an optical interferometry method wherein a beam of light from a laser is directed onto a thin film of a sample of the material to be tested, applied on one side of a flexible substrate, on the opposite side of which a diffraction grating is placed which is a sensor, this beam of light passing through the thin film of the tested material, the light passing through the sample is directed to a the photosensitive matrix recording the interference image in real time formed after light has passed through the sample, data from the interference image are obtained on the basis of which the components of relative deformation ($\varepsilon_x$, $\varepsilon_y$) and Poisson's ratio $\mu$ of the tested material are determined, and wherein the beam intensity, corresponding to the zero-order interference fringe passing through the tested material before and after deformation is measured, the method being **characterized by** the steps of

    i. introducing modulation of the laser beam with a periodic function of a given frequency that allows to obtain in the detection path a signal independent of external interference factors,
    ii. amplifying the AC signal from the photosensitive matrix and filtering the signal using a Fourier filter or phase-sensitive amplifier,
    iii. directing the zero-order interference fringe directly onto a photo recorder using a semi-transparent mirror so that during the measurement the intensity of the zero-order interference fringe falling on the photosensitive matrix decreases, and
    iv. obtaining identification of the strength limit of the tested material.

2. The method according to claim 1, **characterized by** the steps of determining for the film of tested material with microcracks, the total cross-sectional area of cracks in relation to the surface determined by the cross-section of the laser beam, and obtaining the parameter of the degree of cracking of the tested material.

3. The method according to claim 1 or 2, **characterized by** using a deformable diffraction grating as sensor.

**Patentansprüche**

1. Verfahren zur Bestimmung der Festigkeitsgrenze und des Crackgrads eines Materials unter Verwendung einer optischen Interferometrie-Methode, wobei in diesem Verfahren ein Lichtstrahl von einem Laser auf eine dünne Schicht des geprüften Materials gerichtet wird, das auf einer Seite eines elastischen Untergrunds angebracht ist, auf dessen anderer Seite ein Beugungsgitter als Sensor angebracht ist, der Lichtstrahl geht durch die dünne Schicht der Probe und wird auf die lichtempfindliche Matrix gerichtet, die das Interferenzbild in Echtzeit registriert, das nach dem Durchgang des Lichts durch die Probe entsteht, es werden Daten aus dem Interferenzbild gewonnen, auf deren Grundlage die Bestandteile der relativen Verformung ($\varepsilon_x$, $\varepsilon_y$) sowie die Poissonzahl $\mu$ des geprüften Materials bestimmt werden, und auf diese Weise wird die Intensität des Strahls gemessen, der dem Null-Interferenzstreifen entspricht, der durch das geprüfte Material vor und nach seiner Verformung durchgeht, wobei dieses Verfahren durch die folgenden Schritte **gekennzeichnet ist:**

    i. Einführung der Modulierung des Laserstrahls mit periodischer Funktion der jeweiligen Frequenz, was die Erlangung eines von äußeren störenden Faktoren unabhängigen Signals auf der Detektionsbahn ermöglicht,
    ii. Verstärkung des AC-Signals von der lichtempfindlichen Matrix und Filterung des Signals mithilfe eines Fourier-Filters oder phasenempfindlichen Verstärkers,
    iii. Ausrichtung des Null-Interferenzstreifens direkt auf das Photoregistriergerät, mithilfe eines halbdurchlässigen Spiegels, so, dass während der Messung die Intensität des Null-Interferenzstreifens abnimmt, der auf die lichtempfindliche Matrix fällt, sowie
    iv. Erhalt der Identifikation der Festigkeitsgrenze des geprüften Materials.

2. Verfahren nach Anspruch 1, **gekennzeichnet durch** die Schritte der Bestimmung - für die Schicht des geprüften Materials mit Mikrorissen - des Gesamtfelds des Querschnitts der Risse im Verhältnis zu der vom Querschnitt des Laserstrahls bestimmten Fläche, und Erhalt des Parameters des Rissgrades des geprüften Materials.

**3.** Verfahren nach Anspruch 1 oder 2, **gekennzeichnet durch** die Verwendung eines verformenden Beugungsgitters als Sensor.

**Revendications**

**1.** Le procédé pour déterminer la limite de force et le degré de craquage d'un matériau utilisant une méthode d'interférométrie optique, dans laquelle le faisceau lumineux d'un laser est dirigé vers une couche mince d'un échantillon du matériau à tester, placé d'un côté d'un support flexible sur l'autre côté duquel un réseau de diffraction est placé comme capteur, le faisceau lumineux traverse la couche mince de l'échantillon et est dirigé vers une matrice photosensible qui enregistre en temps réel une image d'interférence formée après le passage de la lumière à travers l'échantillon, les données de l'image d'interférence sont obtenues, à partir de ces données les composantes de la déformation relative ($\varepsilon_x$, $\varepsilon_y$) et le coefficient de Poisson $\mu$ du matériau testé sont déterminés, dans ce procédé, l'intensité du faisceau, correspondant à une frange d'interférence nulle, traversant le matériau testé avant et après sa déformation est mesurée, le procédé étant **caractérisé par** les étapes suivantes :

i. l'introduction d'une modulation du faisceau laser avec une fonction périodique d'une fréquence donnée, permettant d'obtenir un signal indépendant des facteurs d'interférence externes dans le chemin de détection,
ii. le gain du signal AC provenant de la matrice photosensible et le filtrage du signal à l'aide d'un filtre de Fourier ou d'un amplificateur sensible à la phase,
iii. la direction de la frange d'interférence zéro directement sur l'enregistreur de photos au moyen d'un miroir translucide de manière à ce que l'intensité de la frange d'interférence zéro incidente sur la matrice photosensible diminue pendant la mesure, et
iv. l'obtention de l'identification de la limite de force du matériau testé.

**2.** Le procédé selon la revendication 1, **caractérisé par** les étapes de détermination pour la couche de matériau à tester présentant des microfissures, de la surface totale de la section transversale des fissures par rapport à la surface définie par la section transversale du faisceau laser et d'obtention du paramètre de degré de fissuration du matériau à tester.

**3.** Le procédé selon la revendication 1 ou 2, **caractérisé par** l'utilisation du réseau de diffraction déformable comme capteur.

Fig. 1

$$\mu_s = \tan(\alpha) = -\frac{\varepsilon_x}{\varepsilon_y} = 0.38 \pm 0.08$$

Fig. 2

a- LASER, b − sample, c − CCD matrix, d − mirror, e − photodetector, f − amplifier, g − Fourier filter, h − signal recorder, $I_0$ − $initial\ beam\ intensity$, $I$ − $transmitted\ beam\ intensity$, $\vec{F}$ − $tensile\ force\ vector$

Fig. 3

i − substrate, j − layer of the material under test (thin metallic film for example), k − diffraction grating as an integrated optical strain sensor, $\varepsilon$ − $linear\ strain$

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4939368 A
- US 4781455 A

- US 6795198 B